# EUROPEAN PATENT APPLICATION

(11) **EP 4 068 050 A1**
(43) Date of publication of application: **05.10.2022**
(21) Application number: 20899786.6
(22) Date of filing: 04.12.2020
(51) Int. Cl.: G06F 1/3234

(54) **ELECTRONIC DEVICE AND CO-PROCESSING CHIP**

(30) Priority: 09.12.2019 CN 201911253897
(71) Applicant: GUANGDONG OPPO MOBILE TELECOMMUNICATIONS CORP., LTD., Dongguan, Guangdong 523860 (CN)
(72) Inventor: ZHOU, Feng, Dongguan, Guangdong 523860 (CN)
(74) Representative: Thorniley, Peter
(86) International application number: PCT/CN2020/134021
(87) International publication number: WO 2021/115211

(57) **Abstract**

An electronic device and a co-processing chip, the electronic device comprising: a display screen; a main processing chip, which is used for outputting first display data; and a co-processing chip, which is used for outputting second display data, the co-processing chip comprising a switching module that is used for outputting the first display data to the display screen or outputting the second display data to the display screen. The main processing chip is also used for entering a sleep state when the switching module outputs the second display data to the display screen.

## Description

This application claims priority to Chinese patent application No. 201911253897.8, entitled "ELECTRONIC DEVICE", filed on December 9, 2019 in the China National Intellectual Property Administration (CNIPA), the content of which is incorporated herein by reference in its entirety.

### TECHNICAL FIELD

The present disclosure relates to the electronic technology field, and more particularly to an electronic device and a co-processing chip.

### BACKGROUND

With the development of electronic technology, various electronic devices have become indispensable tools in users' life and work, and electronic devices can support more and more functions. For example, a user can implement a call function, an online shopping function, a navigation function, a game function, and the like through an electronic device.

### SUMMARY OF DISCLOSURE

Embodiments of the present disclosure provide an electronic device and a co-processing chip capable of reducing power consumption of the electronic device.

In a first aspect, an embodiment of the present disclosure provides an electronic device including: a display screen; a main processing chip configured to output first display data; and a co-processing chip configured to output second display data, wherein operating power consumption of the co-processing chip is smaller than operating power consumption of the main processing chip; wherein the co-processing chip includes a switching module, the switching module is electrically connected to the display screen, and the switching module is configured to, according to control of the co-processing chip, output the first display data to the display screen to control the display screen to work in a first display mode or output the second display data to the display screen to control the display screen to work in a second display mode; and the main processing chip is further configured to enter a hibernate state when the display screen works in the second display mode.

In a second aspect, an embodiment of the present disclosure further provides an electronic device including a display screen and a co-processing chip. The co-processing chip includes: a control unit configured to generate second display data; and a switching module comprising a first port, a second port, and a third port, wherein the first port is electrically connected to the control unit to receive the second display data, the second port is configured to receive first display data, the third port is selectively connected to the first port or the second port, and the third port is further electrically connected to the display screen to output the second display data or the first display data to the display screen.

In a third aspect, an embodiment of the present disclosure further provides a co-processing chip. The co-processing chip includes: a control unit configured to generate second display data; and a switching module comprising a first port, a second port, and a third port, wherein the first port is electrically connected to the control unit to receive the second display data, the second port is configured to receive first display data, the third port is selectively connected to the first port or the second port to output the second display data or the first display data to outside.

### BRIEF DESCRIPTION OF DRAWINGS

In order to illustrate the technical solutions in the embodiments of the present disclosure more clearly, the drawings used in the description of the embodiments are briefly described below. It is obvious that the drawings in the following description are only some embodiments of the present disclosure. For those skilled in the art, other drawings can also be obtained from these drawings without any creative effort.
FIG. 1 illustrates a schematic diagram of a first structure of an electronic device provided by an embodiment of the present disclosure.
FIG. 2 illustrates a schematic diagram of a display screen of the electronic device in a screen-on display mode provided by an embodiment of the present disclosure.
FIG. 3 illustrates a schematic diagram of the display screen of the electronic device in a screen-off display mode provided by an embodiment of the present disclosure.
FIG. 4 illustrates a schematic diagram of a first structure of a co-processing chip of the electronic device provided by an embodiment of the present disclosure.
FIG. 5 illustrates a schematic diagram of a second structure of the co-processing chip of the electronic device provided by an embodiment of the present disclosure.
FIG. 6 illustrates a schematic diagram of a second structure of an electronic device provided by an embodiment of the present disclosure.
FIG. 7 illustrates a first schematic diagram of interactions of switching a display mode of the electronic device provided by an embodiment of the present disclosure.
FIG. 8 illustrates a second schematic diagram of interactions of switching the display mode of the electronic device provided by an embodiment of the present disclosure.
FIG. 9 illustrates a schematic diagram of interactions provided by an embodiment of the present disclosure when the electronic device switches the display mode according to a user operation.

### DETAILED DESCRIPTION OF EMBODIMENTS

The following clearly and completely describes the technical solutions in the embodiments of the present disclosure with reference to the accompanying drawings in the embodiments of the present disclosure. The described embodiments are some rather than all of the embodiments of the present disclosure. All other embodiments obtained by those skilled in the art based on the embodiments of the present disclosure without creative efforts shall fall within the protection scope of the present disclosure.

An embodiment of the present disclosure provides an electronic device. The electronic device can be a smart phone, a smart watch, or a tablet computer, or can be a game device, an Augmented Reality (AR) device, a car device, a data storage device, an audio playback device, a video playback device, a notebook computer, or a desktop computing devices, or can also be a wearable electronic device, such as an electronic helmets, electronic glasses, or electronic clothing.

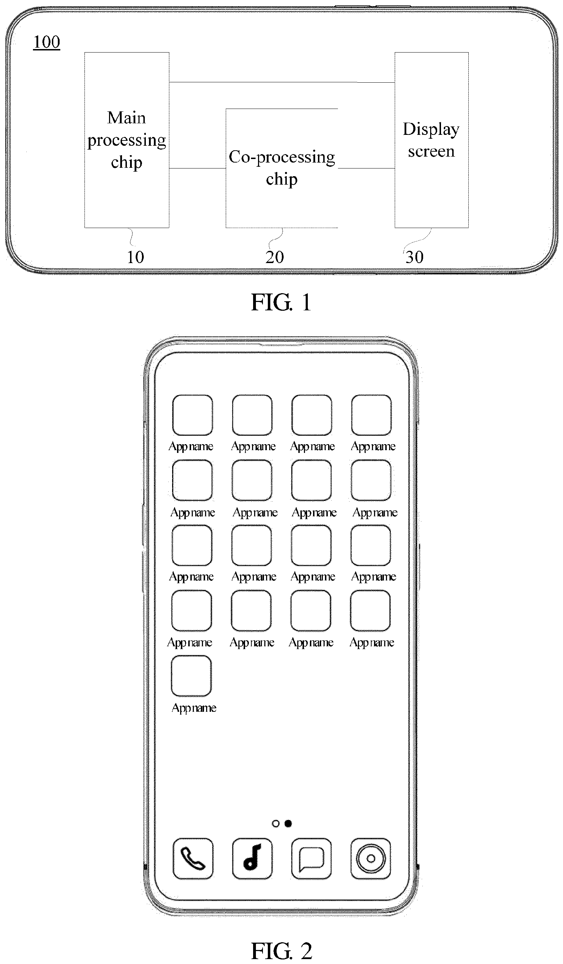

Please refer to FIG. 1. FIG. 1 illustrates a schematic diagram of a first structure of an electronic device 100 provided by an embodiment of the present disclosure.

The electronic device 100 includes a main processing chip 10, a co-processing chip 20, and a display screen 30. The main processing chip 10 is electrically connected to the display screen 30, and the co-processing chip 20 is electrically connected to the main processing chip 10 and the display screen 30. The display screen 30 is configured to display information, such as text or an image. It can be understood that the electrical connection can be a direct connection to realize transmission of an electrical signal, or can be an indirect connection, for example, an indirect connection through another electronic device such as a switch to realize the transmission of the electric signal. For example, the main processing chip 10 can be directly electrically connected to the display screen 30, or can also be electrically connected to the display screen 30 through an electronic device such as a switch in the co-processing chip 20.

The main processing chip 10 can serve as a main control System on Chip (SOC) of the electronic device 100. A processor and a memory, such as a first processor and a first memory, can be integrated on the main processing chip 10. The first processor is, for example, a Central Processing Unit (CPU). The first processor can perform data processing. The first memory can store data, such as a first operating system and application programs. The main processing chip 10 can run the first operating system and the application programs stored in the first memory.

The main processing chip 10 is configured to output first display data. For example, the main processing chip 10 can process an image to be displayed to generate the first display data and output the first display data. The main processing chip 10 can output the first display data to the display screen 30 to control the display screen 30 to work in a first display mode. At this time, the display screen 30 displays information corresponding to the first display data by the first display mode. For example, the main processing chip 10 can control the display screen 30 to display information, such as an image or text. It can be understood that the main processing chip 10 can run the first operating system to control the display screen 30 to display the information corresponding to the first display data by the first display mode under the first operating system.

The first display mode can be understood as a normal display mode of the display screen 30 or a standard power consumption display mode. When the display screen 30 is in the first display mode, power consumption of the display screen 30 is standard power consumption, that is, normal power consumption. The first display mode can include a screen-on display mode or a screen-on work mode. In the screen display mode, the display screen 30 is lit. Icons and names of multiple applications can be displayed on the display screen 30 as shown in FIG. 2. FIG. 2 illustrates a schematic diagram of the display screen 30 of the electronic device in the screen-on display mode provided by an embodiment of the present disclosure. When a user clicks an icon of an application, the electronic device 100 can start the corresponding application. Furthermore, it can be understood that information such as time, date, weather, temperature and the like can also be displayed on the display screen 30.

The co-processing chip 20 is an SOC with low power consumption. Operating power consumption of the co-processing chip 20 is smaller than operating power consumption of the main processing chip 10. A processor and a memory, such as a second processor and a second memory, can also be integrated on the co-processing chip 20. The second processor can perform data processing. The second memory can store data, such as a second operating system and application programs. The co-processing chip 20 can run the second operating system and the application programs stored in the second memory.

The co-processing chip 20 is configured to output second display data. For example, the co-processing chip 20 can process an image to be displayed to generate second display data and output the second display data. The co-processing chip 20 can output the second display data to the display screen 30 to control the display screen 30 to work in a second display mode. At this time, the display screen 30 displays information corresponding to the second display data by the second display mode. For example, the co-processing chip 20 can also control the display screen 30 to display information, such as an image and text. It can be understood that the co-processing chip 20 can run the second operating system to control the display screen 30 to display the information corresponding to the second display data by the second display mode under the second operating system.

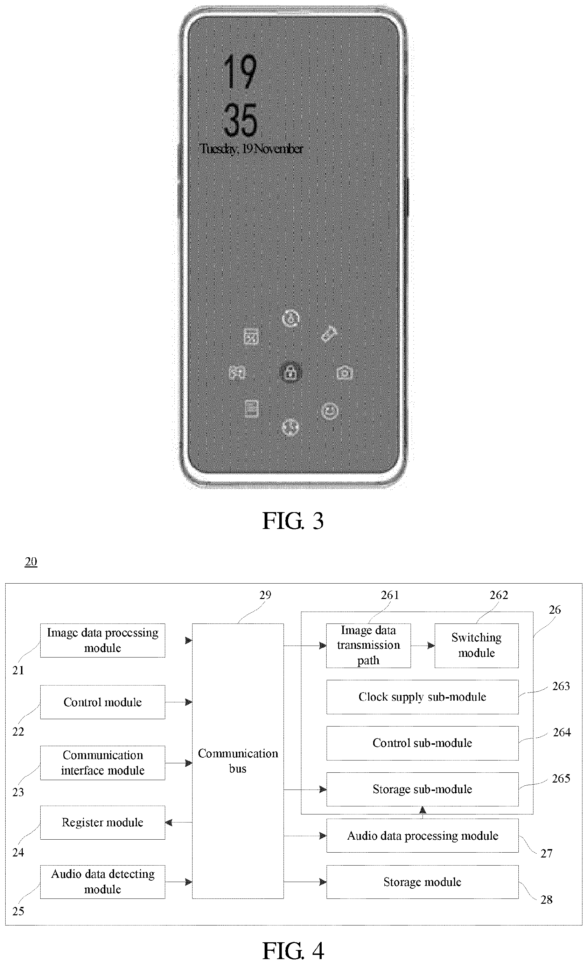

The second display mode can be understood as a low power consumption display mode of the display screen 30. When the display screen 30 is in the second display mode, power consumption of the display screen 30 is low. At this time, the power consumption of the display screen 30 is lower than the standard power consumption, that is, lower than the normal power consumption. That is, the power consumption of the display screen 30 in the second display mode is lower than the power consumption of the display screen 30 in the first display mode. The second display mode can include a screen-off display mode. The screen-off display mode (Always On Display, AOD) refers to a display mode in which the display screen 30 displays information when the electronic device 10 is in a screen-off state as shown in FIG. 3. FIG. 3 illustrates a schematic diagram of the display screen 30 of the electronic device in the screen-off display mode provided by an embodiment of the present disclosure. In a possible implementation manner, the electronic device 100 can emit light through pixels with self-luminous capability in the off-screen display mode. In the off-screen display mode, the power consumption of the electronic device 100 is low and displaying the corresponding information can be realized.

It should be noted that in the second display mode, some functions of the electronic device 100 are locked, and other functions can still be used. For example, in the off-screen display mode, the display screen 30 of the electronic device 100 is locked and off, but the display screen 30 can display some information in a screen-off manner. For example, the display screen 30 can display information, such as time, lock screen identification, shortcut application icons and the like. The shortcut application icons can include a calculator, a game console, a sticky note, a camera, a flashlight and the like. When the user clicks one of the shortcut application icons, the electronic device 100 can start the corresponding shortcut application.

It can be understood that when the co-processing chip 20 outputs the second display data to the display screen 30 to control the display screen 30 to display the information corresponding to the second display data by the second display mode, the main processing chip 10 can enter a hibernate state to save the power consumption of the main processing chip 10, thereby reducing the power consumption of the electronic device 100.

Since the first display mode is a standard power consumption display mode and the second display mode is a low power consumption display mode, the first operating system can be understood as a standard power consumption operating system and the second display mode can be understood as a low power consumption operating system. Accordingly, in the electronic device 100, it can also be understood that the main processing chip 10 is configured to control the display screen 30 to display the information by the first display mode in response to the electronic device 100 running the standard power consumption operating system, and the co-processing chip 20 is configured to control the control display 30 to display the information by the second display mode in response to the electronic device 100 running the low power consumption operating system. When the main processing chip 10 controls the display screen 30 to display the information by the first display mode in response to the electronic device 100 running the standard power consumption operating system, the co-processing chip 20 is in the hibernate state. When the co-processing chip 20 controls the display screen 30 to display the information by the second display mode in response to the electronic device 100 running the low power operating system, the main processing chip 10 is in the hibernate state.

Furthermore, it can be understood that since the operating power consumption of the co-processing chip 20 is smaller than the operating power consumption of the main processing chip 10, the processing capability of the co-processing chip 20 is smaller than the processing capability of the main processing chip 10. That is, the processing capability of the main processing chip 10 is relatively strong, while the processing capability of the co-processing chip 20 is relatively weak. When the display screen 30 is in the first display mode, the main processing chip 10 can perform all data processing and control the display screen 30 to display the information based on the first operating system. When the display screen 30 is in the second display mode, the co-processing chip 20 can only perform partial data processing and control the display screen 30 to display the information based on the second operating system.

In the description of the present disclosure, it should be understood that the terms such as "first" and "second" are only intended to distinguish similar objects, and should not be construed as indicating or implying relative importance or implicitly indicating a quantity of technical features of the indicated objects.

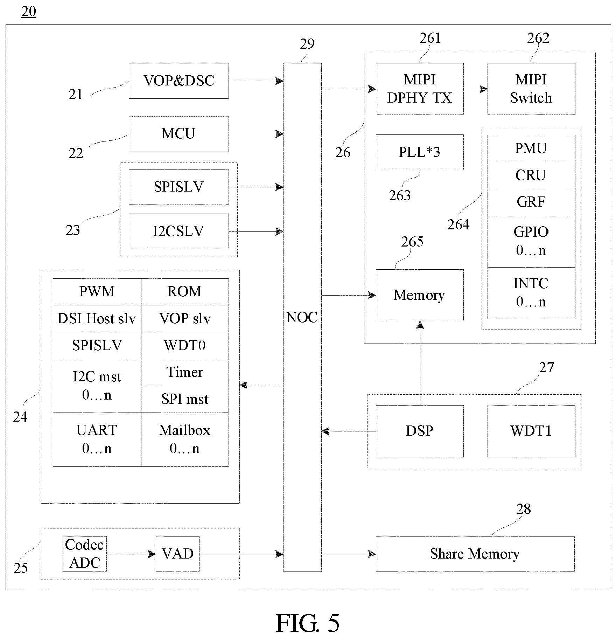

Please refer to FIG. 4 and FIG. 5 at the same time. FIG. 4 illustrates a schematic diagram of a first structure of the co-processing chip 20 of the electronic device provided by an embodiment of the present disclosure. FIG. 5 illustrates a schematic diagram of a second structure of the co-processing chip 20 of the electronic device provided by an embodiment of the present disclosure.

The co-processing chip 20 includes an image data processing module 21, a control module 22, a communication interface module 23, a register module 24, an audio data detecting module 25, a normally-on module 26, an audio data processing module 27, a storage module 28, and a communication bus 29.

The image data processing module 21, such as VOP&DSC, is configured to perform image processing, such as layer synthesis and image rendering. The image data processing module 21 supports MIPI-DSI of 4 channels of image data, supports 3 channels of layer synthesis, and supports VESA DSC. It should be noted that in a general electronic device, image rendering needs to be performed through a Graphics Processing Unit (GPU). In the co-processing chip 20 of the present disclosure, image rendering can be directly performed through the image data processing module 21. A GPU does not need to participate in the image rendering when the chip 20 is working. As such, power consumption of the GPU can be saved, and the power consumption of the electronic device 100 can be further reduced.

The control module 22 is such as a control unit MCU (Micro Control Unit). The control unit MCU is configured to control the entire co-processing chip 20 and perform a data operation. For example, when the co-processing chip 20 starts to work, the co-processing chip 20 in initialized, and the data operation and the like are performed when the co-processing chip 20 works. The MCU can be understood as a control core of the co-processing chip 20, or the MCU can also be understood as the second processor integrated on the co-processing chip 20. A processing frequency of the MCU can reach 300 MHz, which can be used for control and logic processing.

The communication interface module 23 is configured to communicate with the main processing chip 10. The communication interface module 23 can include an SPISLV interface and an I2CSLV interface. Both the SPISLV interface and the I2CSLV interface can be used for communicating with the main processing chip 10.

The register module 24 is configured to store configuration information of the co-processing chip 20. The configuration information is configured to be read by the MCU when the co-processing chip 20 is initialized, and the MCU initializes the co-processing chip 20 according to the configuration information. The configuration information can include, for example, configuration information of ports or modules such as PWM, DSI Host slv, SPISLV, I2C mst0...n, UART0...n, ROM, VOP slv, WDT0, Timer, SPI mst, Mailbox0...n and the like.

The audio data detecting module 25 is configured to collect audio data and judging a volume level. The audio data detecting module 25 includes a Codec ADC and a VAD. The Codec ADC is electrically connected to the VAD. The Codec ADC is configured to sample the audio data. The VAD is configured to judge the volume level of the sampled audio data. When the volume level does not reach a preset volume level, the sampled audio data is considered to be invalid audio data, and then the sampled audio data is discarded. When the volume level reaches the preset volume level, the sampled audio data is considered to be valid audio data, and then the collected audio data can be stored.

The normally-on module 26 is always in a power-on working state no matter whether the co-processing chip 20 is in the working state or the hibernate state. The normally-on module 26 is always in the power-on working state, that is, the normally-on module 26 is not powered off. The normally-on module 26 includes an image data transmission path 261, a switching module 262, a clock supply sub-module 263, a control sub-module 264, and a storage sub-module 265.

The image data transmission path 261 is such as MIPI DPHY TX. The switching module 262 is such as MIPI Switch. The MIPI DPHY TX is electrically connected to the MIPI Switch. The MIPI Switch is used for being electrically connected to the display screen. Image data generated by VOP&DSC after image processing is sent to the MIPI Switch through the MIPI DPHY TX, and then sent to the display screen by the MIPI Switch for display. The MIPI DPHY TX can support a data transmission rate of 2.5 Gbps.

It should be noted that the MIPI Switch is further electrically connected to the main processing chip 10. Image data generated by the main processing chip 10 after image processing can also be sent to the MIPI Switch, and then sent to the display screen by the MIPI Switch for display.

The MIPI Switch is further electrically connected to the MCU. The MCU controls the MIPI Switch. When the display screen needs to be controlled by the main processing chip 10, the MCU controls the MIPI Switch to switch to the main processing chip 10, so that the first display data generated by the main processing chip 10 can be sent to the display screen through the MIPI Switch for display. When the display screen needs to be controlled by the co-processing chip 20, the MCU controls the MIPI Switch to switch to the MIPI DPHY TX, so that the second display data generated by the VOP&DSC of the co-processing chip 20 can be sent to the display screen through the MIPI Switch for display.

The clock supply sub-module 263 is such as PLL^{∗}3. The PLL^{∗}3 is configured to provide a clock signal for the co-processing chip 20.

The control sub-module 264 can also be configured to control the co-processing chip 20. It should be noted that a control function of the control sub-module 264 on the co-processing chip 20 is different from a control function of the MCU on the co-processing chip 20. The control sub-module 264 can include a plurality of control ports and communication ports, such as a plurality of ports including PMU, CRU, GRF, GPIO0...n, INTC0...n and the like. The PMU port is used for power management. The CRU port is used for clock control. The GRF port is used for register control. The GPIO0...n ports and the INTC0...n ports are used for communication.

The storage sub-module 265 is such as Memory. The Memory can be used for storing the audio data detected by the audio data detecting module 25, and can also be used for storing other data, such as the second display data generated by the VOP&DSC.

The audio data processing module 27 is configured to process the audio data. The audio data processing module 27 can include DSP and WDT1. The DSP is configured to extract a keyword from the audio data. The extracted keyword can be used for controlling the co-processing chip 20 to implement voice control of the co-processing chip 20 by the user. Furthermore, in a possible implementation manner, voiceprint recognition can also be performed through the DSP, so as to authenticate the user's voice control through the voiceprint recognition of the DSP. A processing frequency of the DSP can reach 400 MHz, which can process a voice algorithm more efficiently. As such, the co-processing chip 20 can process the sampled audio data three times. That is, the VAD performs the volume judgment in a first process, the DSP performs the keyword extraction in a second process, and the DSP performs the voiceprint recognition in a third process. Furthermore, the WDT1 can be used for communicate or configuring the DSP.

It should be noted that in a general electronic device, the Memory and the DSP are built in the same module. That is, the Memory is usually built in an audio processing module. The Memory is only configured to store the audio data and cannot be configured to store other data. In the co-processing chip 20 of the present disclosure, the Memory is separated from the audio data processing module 27. The Memory is built in the normally-on module 26. The Memory not only can be configured to store the audio data, but also can be configured to store other data. As such, the Memory can be shared to improve the utilization of the Memory.

The storage module 28 is such as Share Memory. The Share Memory can be configured to store data, such as the audio data or the image data. The Share Memory can be configured as storage capacity of 1.5 MB.

The communication bus 29 is such as an NOC. The VOP&DSC, the MCU, the SPISLV, the I2CSLV, the register module 24, the VAD, the MIPI DPHY TX, the Memory, the DSP, and the Share Memory can all be electrically connected to the NOC to realize the communication among them.

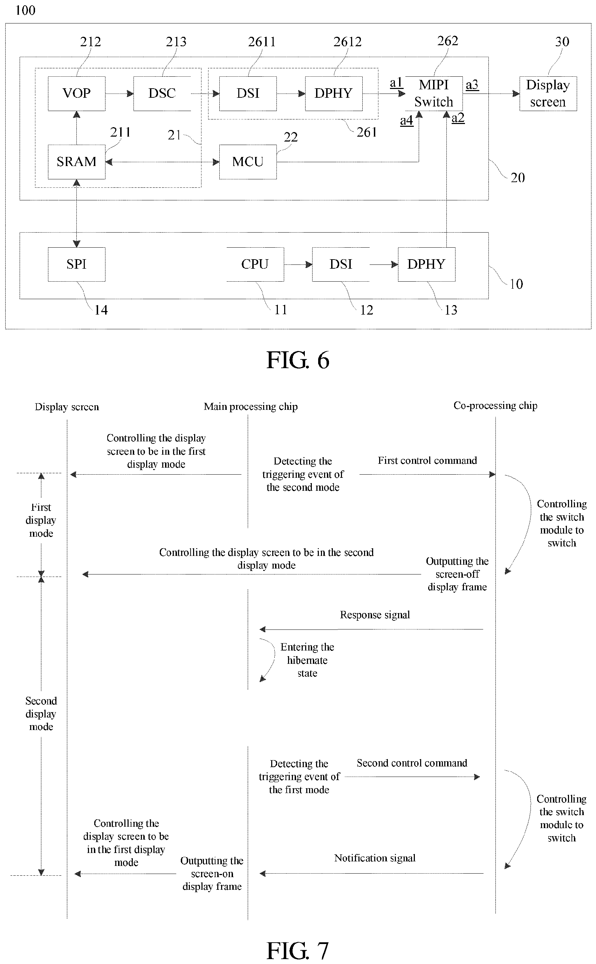

Please refer to FIG. 6. FIG. 6 illustrates a schematic diagram of a second structure of an electronic device 100 provided by an embodiment of the present disclosure.

In the co-processing chip 20, the image data processing module 21 includes a storage unit 211, a data transmission unit 212, and an image processing unit 213. The storage unit 211, the data transmission unit 212, and the image processing unit 213 are electrically connected in sequence. The control unit 22 of the co-processing chip 20, such as the control unit MCU, is configured to perform the data operation to generate the display data. The display data generated by the control unit 22 can also be understood as the second display data. The storage unit 211 is electrically connected to the control unit 22. The storage unit 211, such as a storage unit SRAM, can be configured to store the display data generated by the control unit 22, for example, to store the display data generated by the control unit 22 as the second display data. Furthermore, the storage unit 211 is also electrically connected to the switching module 262 of the co-processing chip 20, so that the second display data stored in the storage unit 211 can be outputted to the display screen 30 through the switching module 262 and the information corresponding to the second display data can be displayed on the display screen. The data transmission unit 212 is such as VOP. The data transmission unit 212 is configured to transmit the second display data stored in the storage unit 211 to the image processing unit 213. The image processing unit 213 is such as DSC. The image processing unit 213 is configured to perform image processing, such as adjusting a size of the image corresponding to the second display data, performing layer drawing, performing image rendering and the like. As such, the processed image is suitable for being displayed on the display screen 30. It can be understood that after the image processing unit DSC of the co-processing chip 20 performs the image processing, the display screen 30 can be directly controlled to display the processed image without an additional GPU for image processing. Accordingly, the power consumption of the GPU can be saved, and the power consumption of the electronic device 100 can be further reduced.

The image data transmission path 261 includes a display interface configuration unit 2611 and a display interface 2612. The display interface configuration unit 2611 is electrically connected to the display interface 2612. The display interface configuration unit 2611 is also electrically connected to the image processing unit 213, and the display interface 2612 is also electrically connected to the switching module 262, so as to realize an electrical connection between the storage unit 211 and the switching module 262. The display interface configuration unit 2611, such as DSI, is configured to perform configuration according to a display interface standard specified by the MIPI Switch, so that the image data transmission path 261 conforms to the display interface standard specified by the MIPI Switch. The display interface 2612, such as DPHY, is implemented by a physical layer of the display interface, so as to realize an electrical connection between the image data transmission path 261 and the switching module 262 through a physical medium.

The switching module 262 is, for example, MIPI Switch. The switching module 262 is electrically connected to the display interface 2612 and the display screen 30 of the electronic device 100. Accordingly, the switching module 262 can output the second display data stored in the storage unit 211 to the display screen 30, that is, output the second display data outputted by the co-processing chip 20 to the display screen 30. The switching module 262 can also be understood as a switching switch.

The switching module 262 includes a first port a1, a second port a2, a third port a3, and a fourth port a4.

The first port a1 is electrically connected to the display interface 2612 to realize an electrical connection with the control unit 22, so that the first port a1 can receive the display data generated by the control unit 22, for example, receive the second display data generated by the control unit 22.

The second port a2 is electrically connected to the main processing chip 10 to receive the first display data outputted from the main processing chip 10.

The third port a3 can be selectively connected to the first port a1 or the second port a2 to output the second display data or the first display data to the outside, for example, to output the second display data or the first display data to the display screen 30. As such, the information corresponding to the second display data or the information corresponding to the first display data is displayed on the display screen 30. It can be understood that when the third port a3 is connected to the first port a1, the third port a3 can output the second display data to the outside. When the third port a3 is connected to the second port a2, the third port a3 can output the first display data to the outside.

A function of the fourth port a4 is described below.

It can be understood that the storage unit 211 is electrically connected to the control unit 22 to store the display data generated by the control unit 22, for example, to store the second display data generated by the control unit 22. The first port a1 is electrically connected to the storage unit 211. For example, the first port a1 can be electrically connected to the storage unit 211 through the VOP, the DSC, the DSI, and the DPHY, so that the first port a1 can receive the second display data stored in the storage unit 211.

The main processing chip 10 includes a first processor 11, a display interface configuration unit 12, and a display interface 13. The first processor 11, the display interface configuration unit 12, and the display interface 13 are electrically connected in sequence. Furthermore, the display interface 13 is also electrically connected to the switching module 262 of the co-processing chip 20. For example, the display interface 13 is electrically connected to the second port a2 of the switching module 262, so as to realize an electrical connection between the main processing chip 10 and the switching module 262. As such, the main processing chip 10 can output the generated display data, such as the first display data, to the switching module 262 and output the first display data to the display screen 30 through the switching module 262. The first processor 11 is such as a CPU. The first processor 11 is configured to perform a data operation to generate the display data. The display interface configuration unit 12, such as DSI, is similar to the display interface configuration unit 2611 of the co-processing chip 20. The display interface configuration unit 12 is also configured to perform configuration according to the display interface standard specified by the MIPI Switch, so that image data transmission of the main processing chip 10 conforms to the display interface standard specified by the MIPI Switch. The display interface 13, such as DPHY, is similar to the display interface 2612 of the co-processing chip 20. The display interface 13 is also implemented by the physical layer of the display interface, so as to realize an electrical connection between the main processing chip 10 and the switching module 262 through the physical medium.

Furthermore, the main processing chip 10 can further include a communication interface unit 14. The communication interface unit 14 is, for example, an SPI. The communication interface unit 14 is electrically connected to the storage unit 211 of the co-processing chip 20, so as to realize an electrical connection between the main processing chip 10 and the storage unit 211 of the co-processing chip 20. Accordingly, the display data generated by the main processing chip 10 can also be sent to the storage unit 211 through the communication interface unit 14 for storage. It should be noted that when the display data generated by the main processing chip 10 is outputted to the switching module 262 through the display interface 13 and outputted to the display screen 30 through the switching module 262, the outputted data of the main processing chip 10 is the first display data. When the display data generated by the main processing chip 10 is sent to the storage unit 211 through the communication interface unit 14 for storage, transmitted to the switching module 262 through the storage unit 211, and finally outputted to the display screen 30 through the switching module 262, the display data generated by the main processing chip 10 stored in the storage unit 211 at this time is the second display data. That is, the storage unit 211 is configured to store the display data sent by the main processing chip 10 as the second display data, and the co-processing chip 20 outputs the second display data to the display screen 30 through the switching module 262.

The switching module 262 of the co-processing chip 20 is configured to, according to control of the co-processing chip 20, output the first display data outputted by the main processing chip 10 to the display screen 30, so that the main processing chip 10 controls the display screen 30 to display the information by the first display mode, or output the second display data outputted by the co-processing chip 20 to the display screen 30, so that the co-processing chip 20 controls the display screen 30 to display the information by the second display mode.

When the switching module 262 outputs the second display data outputted by the co-processing chip 20 to the display screen 30, that is, when the co-processing chip 20 controls the display screen 30 to display the second display the information by the second display mode, the main processing chip 10 can enter the hibernate state to save the power consumption of the main processing chip 10, thereby reducing the power consumption of the electronic device 100. Similarly, when the switching module 262 outputs the first display data outputted by the main processing chip 10 to the display screen 30, that is, when the main processing chip 10 controls the display screen 30 to display the information by the first display mode, the co-processing chip 20 can enter the hibernate state to save the power consumption of the co-processing chip 20, thereby reducing the power consumption of the electronic device 100. It should be noted that when the co-processing chip 20 enters the hibernate state, the normally-on module 26 of the co-processing chip 20 is still in the power-on working state. The switching module 262 is provided in the normally-on module 26, so the switching module 262 can also be in the working state and can still output the display data.

It can be understood that the co-processing chip 20 can be configured to: control the switching module 262 to output the first display data outputted by the main processing chip 10 to the display screen 30 when the display screen 30 is in the first display mode; and control the switching module 262 to output the second display data outputted by the co-processing chip 20 to the display screen 30 when the display screen 30 is in the second display mode.

Please continue to refer to FIG. 6. In the co-processing chip 20, the control unit 22 is further electrically connected to the switching module 262, so that the control unit 22 can control the switching of the switching module 262 to realize control of the switching module 262 by the co-processing chip 20. The control unit 22 controls the switching module 262 to be electrically connected to the main processing chip 10 or to be electrically connected to the storage unit 211 of the co-processing chip 20, so that the switching module 262 outputs the first display data outputted by the main processing chip 10 or the second display data outputted by the co-processing chip 20 to the display screen 30.

When the control unit 22 controls the switching module 262 to be electrically connected to the main processing chip 10, the switching module 262 outputs the first display data outputted by the main processing chip 10 to the display screen 30. At this time, the main processing chip 10 controls the display screen 30 to display the information by the first display mode. When the control unit 22 controls the switching module 262 to be electrically connected to the storage unit 211 of the co-processing chip 20, the switching module 262 outputs the second display data outputted by the co-processing chip 20 to the display screen 30. At this time, the co-processing chip 20 controls the display screen 30 to display the information by the second display mode.

The fourth port a4 of the switching module 262 is electrically connected to the control unit 22 to receive a control command sent by the control unit 22, so as to realize to switch the switching module 262 according to the control command sent by the control unit 22.

In the electronic device 100 provided by the embodiment of the present disclosure, the switching module 262 can output the first display data outputted by the main processing chip 10 to the display screen 30 or output the second display data outputted by the co-processing chip 20 to the display screen 30, thereby controlling the display screen 30 to display by the main processing chip 10 or controlling the display screen 30 to display by the co-processing chip 20. The main processing chip 10 enters the hibernate state when the switching module 262 outputs the second display data to the display screen 30. That is, the main processing chip 10 enters the hibernate state when the co-processing chip 20 controls the display screen 30 to display. Accordingly, the main processing chip 10 can hibernate intermittently and does not need to be in the working state all the time. The operating power consumption of the co-processing chip 20 is smaller than the operating power consumption of the main processing chip 10. When the main processing chip 10 hibernates, the display screen 30 can be controlled to display through the co-processing chip 10 with the lower power consumption. As such, continuous display of the display screen 30 can be ensured to meet needs of the user, and the power consumption of the electronic device 100 can be reduced effectively to extend the battery life of the electronic device 100.

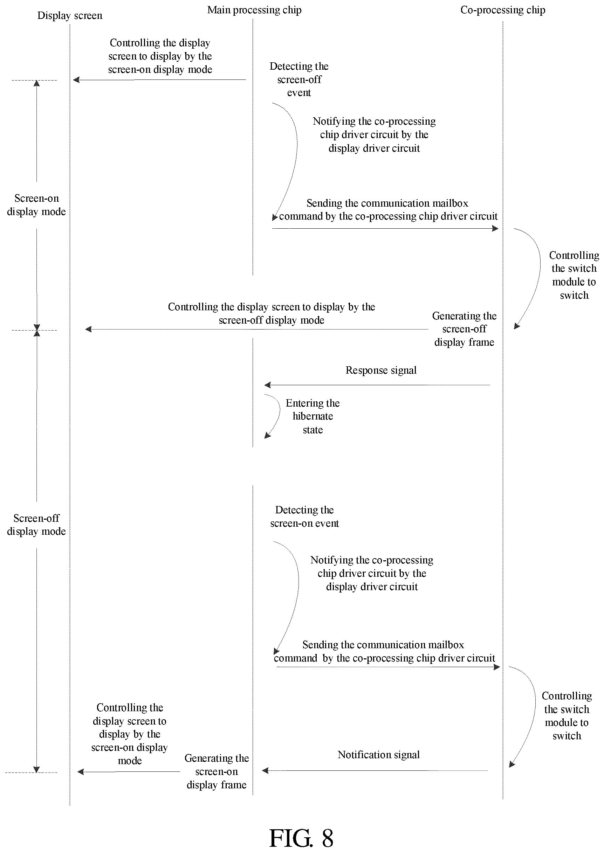

Please refer to FIG. 7 and FIG. 8. FIG. 7 illustrates a first schematic diagram of interactions of switching the display mode of the electronic device 100 provided by an embodiment of the present disclosure. FIG. 8 illustrates a second schematic diagram of interactions of switching the display mode of the electronic device 100 provided by an embodiment of the present disclosure.

When the main processing chip 10 controls the display screen 30 to be in the first display mode, the main processing chip 10 sends a first control command to the co-processing chip 20 if the main processing chip 10 detects a triggering event of the second display mode. Subsequently, the co-processing chip 20 controls the switching module 262 to switch according to the first control command to output the second display data outputted by the co-processing chip 20 to the display screen 30 to switch the display screen 30 to the second display mode. It can be understood that when the main processing chip 10 sends the first control command to the co-processing chip 20, the main processing chip 10 can send a wake-up signal to the co-processing chip 20 first, and the co-processing chip 20 wakes up according to the wake-up signal and then responds to the first control command.

The triggering event of the second display mode can be an event triggered by a user operation. For example, the first display mode is the screen-on display mode. When the user performs a screen-off operation, for example, when the user presses a power button of the electronic device 100, the electronic device 100 enters the screen-off state. At this time, the main processing chip 10 can detect the triggering event of the screen-off display mode, that is, detect the triggering event of the second display mode.

It can be understood that the triggering event of the second display mode can also be an event triggered by the electronic device 100 itself. For example, the first display mode is the screen-on display mode. When the electronic device 100 does not receive an operation from the user within a preset time period, the electronic device 100 can automatically enter the screen-off state. At this time, the main processing chip 10 can also detect a triggering event of the screen-off display mode, that is, detect the triggering event of the second display mode. For example, the preset time period can be 30 seconds.

When the co-processing chip 20 controls the display screen 30 to be in the second display mode, the main processing chip 10 sends a second control command to the co-processing chip 20 if the main processing chip 10 detects a triggering event of the first display mode. Subsequently, the co-processing chip 20 controls the switching module 262 to switch according to the second control command to output the first display data outputted by the main processing chip 10 to the display screen 30 to switch the display screen 30 to the first display mode.

The triggering event of the first display mode can also be an event triggered by a user operation. For example, when the second display mode is the screen-off display mode, the electronic device 100 enters the screen-on state if the user performs a screen-on operation (for example, the user presses the power button of the electronic device 100, or a fingerprint module of the electronic device 100 receives a user fingerprint unlocking operation and the electronic device is successfully unlocked). At this time, the main processing chip 10 can detect the triggering event of the screen-on display mode, that is, detect the triggering event of the first display mode.

It can be understood that the triggering event of the first display mode can also be an event triggered by the electronic device 100 itself. For example, the second display mode is the off-screen display mode. When the electronic device 100 receives an incoming call or receives a short message, the electronic device 100 automatically enters the screen-on state. At this time, the main processing chip 10 can also detect the triggering event of the screen-on display mode, that is, detect the triggering event of the first display mode.

It should be noted that when the main processing chip 10 controls the display screen 30 to be in the screen-on display mode, the main processing chip 10 is in the working state. Accordingly, the main processing chip 10 can monitor the triggering event of the screen-off display mode of the electronic device 100. When the co-processing chip 20 controls the display screen 30 to be in the screen-off display mode, it can be understood that although the main processing chip 10 enters the hibernate mode, the main processing chip 10 can still reside and monitor a process in a system to monitor a user operation on the electronic device 100 100 or monitor an event which occurs on the electronic device 100. At this time, the main processing chip 10 can monitor the triggering event of the screen-on display mode of the electronic device 100.

It can be understood that after the main processing chip 10 sends the first control command or the second control command to the co-processing chip 20, the first control command and the second control command can be processed by the control unit 22 of the co-processing chip 20. For example, after the main processing chip 10 sends the first control command to the co-processing chip 20, the control unit 22 receives the first control command, and then the control unit 22 can send the first control command to the fourth port a4 of the switching module 262. Subsequently, the switching module 262 can control the third port a3 to be electrically connected to the first port a1 according to the first control command, so that the second display data outputted by the co-processing chip 20 is outputted to the display screen 30, thereby controlling the display screen 30 to be switched to the second display mode. After the main processing chip 10 sends the second control command to the co-processing chip 20, the control unit 22 receives the second control command, and then the control unit 22 can send the second control command to the fourth port a4 of the switching module 262. Subsequently, the switching module 262 can control the third port a3 to be electrically connected to the second port a2 according to the second control command, so that the first display data outputted by the main processing chip 10 is outputted to the display screen 30, thereby controlling the display screen 30 to be switched to the first display mode.

Furthermore, it can be understood that when the display screen 30 is switched from the first display mode to the second display mode, the control of the display screen 30 is switched from the main processing chip 10 to the co-processing chip 20. In order to prevent image sticking of the display screen 30 after the switching, the co-processing chip 20 needs to immediately output an image frame and output the same to the display screen 30 for display. At this time, the co-processing chip 20 can output a screen-off display frame, and the screen-off display frame can be outputted to the display screen 30 for display through the switching module 262.

Similarly, when the display screen 30 is switched from the second display mode to the first display mode, the control of the display screen 30 is switched from the co-processing chip 20 to the main processing chip 10. In order to prevent image sticking of the display screen 30 after the switching, the main processing chip 10 needs to immediately output an image frame and output the same to the display screen 30 for display. At this time, the main processing chip 10 can output a screen-on display frame, and the screen-on display frame can be outputted to the display screen 30 for display through the switching module 262.

Furthermore, it can also be understood that the main processing chip 10 detects the triggering event of the second display mode and sends the first control command to the co-processing chip 20. After the co-processing chip 20 controls the switching module 262 to switch according to the first control command, that is, controls the display screen 30 to be switched from the first display mode to the second display mode, the co-processing chip 20 can send a response signal to the main processing chip 10. The response signal is used for indicating that the co-processing chip 20 has controlled the electronic device 100 to complete the switching of the display mode. Subsequently, after receiving the response signal, the main processing chip 10 can enter the hibernate state.

Furthermore, it can also be understood that the main processing chip 10 detects the triggering event of the first display mode and sends the second control command to the co-processing chip 20. After the co-processing chip 20 controls the switching module 262 to switch according to the first control command, the co-processing chip 20 can send a notification signal to the main processing chip 10. The notification signal is used for indicating that the co-processing chip 20 has controlled the switching module 262 to complete the switching. Subsequently, after receiving the notification signal, the main processing chip 10 can output the first display data including the screen-on display frame and output the screen-on display frame to the display screen 30 for display through the switching module 262.

Please refer to FIG. 8. The main processing chip 10 can include a display driver circuit and a co-processing chip driver circuit. The display driver circuit can be configured to drive the display screen 30 to display the information. The co-processing chip driver circuit is configured to drive the co-processing chip 20. The display driver circuit can also interact with the co-processing chip driver circuit. The co-processing chip 20 includes a communication mailbox. The communication mailbox can be, for example, a Mailbox. The main processing chip 10 can communicate with the communication mailbox of the co-processing chip 20 through the co-processing chip driver circuit, so as to realize information exchange between the main processing chip 10 and the co-processing chip 20, thereby realizing the control of the co-processing chip 20 by the main processing chip 10.

It can be understood that when the main processing chip 10 sends the first control command to the co-processing chip 20, the first control command can be sent to the communication mailbox through the co-processing chip driver circuit. Specifically, when the main processing chip 10 detects a screen-off event, the main processing chip 10 can notify the co-processing chip driver circuit through the display driver circuit. Subsequently, the co-processing chip driver circuit sends the first control command to the communication mailbox of the co-processing chip 20. The first control command can be, for example, a communication mailbox command. Subsequently, after receiving the communication mailbox command, the co-processing chip 20 can control the switching module 262 to switch the display screen 30 from the screen-on display mode to the screen-off display mode.

Similarly, when the main processing chip 10 sends the second control command to the co-processing chip 20, the second control command can be sent to the communication mailbox through the co-processing chip driver circuit. Specifically, when the main processing chip 10 detects a screen-on event, the main processing chip 10 can notify the co-processing chip driver circuit through the display driver circuit. Subsequently, the co-processing chip driver circuit sends the second control command to the communication mailbox of the co-processing chip 20. The second control command can also be, for example, a communication mailbox command. Subsequently, after receiving the communication mailbox command, the co-processing chip 20 can control the switching module 262 to switch the display screen 30 from the screen-off display mode to the screen-on display mode.

The electronic device 100 provided by the embodiments of the present disclosure is further described below from the perspective of the main processing chip 10 of the electronic device 100 responding to a user operation.

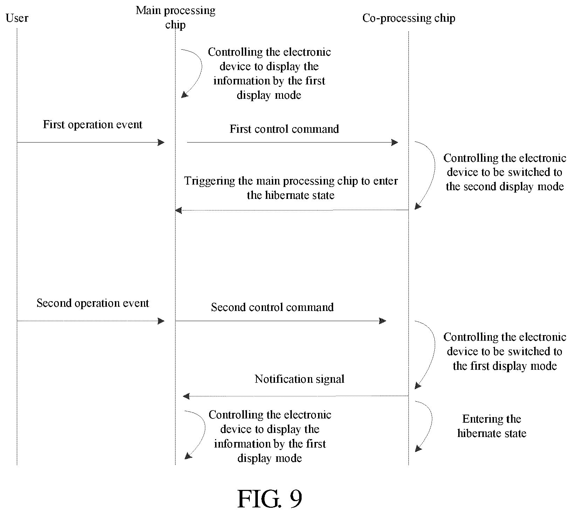

Please refer to FIG. 9. FIG. 9 illustrates a schematic diagram of interactions provided by an embodiment of the present disclosure when the electronic device 100 switches the display mode according to a user operation.

When the main processing chip 10 controls the display screen 30 to display the information in the first display mode and the user operates the electronic device 100 to generate a first operation event, the co-processing chip 20 is configured to control the display screen 30 to be switched from the first display mode to the second display mode in response to the first operation event of the user.

Specifically, when the main processing chip 10 controls the display screen 30 to display the information by the first display mode and the user operates the electronic device 100 to generate the first operation event, the main processing chip 10 generates the first control command according to the first operation event and sends the first control command to the co-processing chip 20. Subsequently, after receiving the first control instruction, the co-processing chip 20 can control the display screen 30 to be switched from the first display mode to the second display mode to display the information, so as to realize the response of the co-processing chip 20 to the first operation event of the user.

The first display mode includes the screen-on display mode. The first operation event is used for triggering the electronic device 100 to turn off the screen.

It can be understood that after the co-processing chip 20 controls the display screen 30 to be switched from the first display mode to the second display mode, the main processing chip 10 can be triggered to enter the hibernate state. For example, after the co-processing chip 20 controls the display screen 30 to be switched from the first display mode to the second display mode, the co-processing chip 20 can send a response signal to the main processing chip 10. The main processing chip 10 can enter the hibernate state after receiving the response signal.

When the co-processing chip 20 controls the display screen 30 to display the information by the second display mode and the user operates the electronic device 100 to generate a second operation event, the co-processing chip 20 is configured to control the display screen 30 to be switched from the second display mode to the first display mode in response to the second operation event of the user.

Specifically, when the co-processing chip 20 controls the display screen 30 to display the information by the second display mode and the user operates the electronic device 100 to generate the second operation event, the main processing chip 10 generates the second operation event according to the second operation event and sends the second control command to the co-processing chip 20. Subsequently, after receiving the second control command, the co-processing chip 20 can control the display screen 30 to be switched from the second display mode to the first display mode to display the information, so as to realize the response of the co-processing chip 20 to the second operation event of the user.

The second display mode includes the screen-off display mode. The second operation event is used for triggering the electronic device 100 to turn on the screen.

It can be understood that after controlling the display screen 30 to be switched from the second display mode to the first display mode, the co-processing chip 20 can send a notification signal to the main processing chip 10. After receiving the notification signal, the main processing chip 10 can control the display screen 30 to display the information by the first display mode. Furthermore, after the co-processing chip 20 controls the display screen 30 to be switched from the second display mode to the first display mode, the co-processing chip 20 can enter the hibernate state to save the power consumption of the co-processing chip 20.

The electronic devices provided by the embodiments of the present disclosure are described in detail above. Although the principles and implementations of the present disclosure are described by specific examples in this specification, the above-mentioned descriptions of the embodiments are only intended to help understand the present disclosure. Moreover, those skilled in the art can make modifications to the specific implementations and an application range according to the idea of the present disclosure. In conclusion, the content of the specification is not intended to be construed as a limitation on the present disclosure.

## Claims

1. An electronic device, comprising:
a display screen;
a main processing chip configured to output first display data; and
a co-processing chip configured to output second display data, wherein operating power consumption of the co-processing chip is smaller than operating power consumption of the main processing chip;
wherein the co-processing chip comprises a switching module, the switching module is electrically connected to the display screen, and the switching module is configured to, according to control of the co-processing chip, output the first display data to the display screen to control the display screen to work in a first display mode or output the second display data to the display screen to control the display screen to work in a second display mode; and
the main processing chip is further configured to enter a hibernate state when the display screen works in the second display mode.

2. The electronic device of claim 1, wherein when the display screen works in the first display mode, the main processing chip sends a first control command to the co-processing chip if the main processing chip detects a triggering event of the second display mode, and the co-processing chip controls the switching module to switch according to the first control command to output the second display data to the display screen to switch the display screen to the second display mode; and
when the display screen works in the second display mode, the main processing chip sends a second control command to the co-processing chip if the main processing chip detects a triggering event of the first display mode, and the co-processing chip controls the switching module to switch according to the second control command to output the first display data to the display screen to switch the display screen to the first display mode.

3. The electronic device of claim 2, wherein the main processing chip comprises a co-processing chip driver circuit, the co-processing chip driver circuit is configured to drive the co-processing chip, and the co-processing chip comprises a communication mailbox;
"the main processing chip sends a first control command to the co-processing chip" comprises: the main processing chip sends the first control command to the communication mailbox through the co-processing chip driver circuit; and
"the main processing chip sends a second control command to the co-processing chip" comprises: the main processing chip sends the second control command to the communication mailbox through the co-processing chip driver circuit.

4. The electronic device of claim 2, wherein when the display screen is switched from the first display mode to the second display mode, the co-processing chip outputs a screen-off display frame and the display screen displays the screen-off display frame; and
when the display screen is switched from the second display mode to the first display mode, the main processing chip outputs a screen-on display frame and the display screen displays the screen-on display frame.

5. The electronic device of claim 4, wherein after the display screen is switched from the first display mode to the second display mode, the co-processing chip sends a response signal to the main processing chip, and the main processing chip enters the hibernate state after receiving the response signal.

6. The electronic device of claim 1, wherein the first display mode comprises a screen-on display mode, and the second display mode comprises a screen-off display mode.

7. The electronic device of claim 1, wherein the co-processing chip is further configured to enter a hibernate state when the display screen works in the first display mode.

8. The electronic device of claim 1, wherein the co-processing chip comprises:
a control unit configured to generate the second display data; and
a storage unit respectively electrically connected to the control unit and the switching module, and the storage unit configured to store the second display data.

9. The electronic device of claim 8, wherein the control unit is further electrically connected to the switching module, and the control unit is configured to control the switching module to be electrically connected to the main processing chip or to be electrically connected to the storage unit to output the first display data to the display screen or to output the second display data to the display screen.

10. The electronic device of claim 9, wherein the switching module comprises a first port, a second port, and a third port, the first port is electrically connected to the storage unit to receive the second display data, the second port is electrically connected to the main processing chip to receive the first display data, the third port is selectively connected to the first port or the second port, and the third port is further electrically connected to the display screen to output the second display data or the first display data to the display screen.

11. The electronic device of claim 10, wherein the switching module further comprises a fourth port, and the fourth port is electrically connected to the control unit to receive a first control command or a second control command sent by the control unit; and
the switching module is further configured to control the third port to be electrically connected to the first port according to the first control command or control the third port to be electrically connected to the second port according to the second control command.

12. The electronic device of claim 8, wherein the main processing chip is further electrically connected to the storage unit, the main processing chip is further configured to send display data to the storage unit, and the storage unit is further configured to store the display data sent by the main processing chip as the second display data.

13. The electronic device of claim 2, wherein the triggering event of the second display mode comprises:
when the display screen works in the first display mode, a power button of the electronic device is pressed; or
when the display screen works in the first display mode, the electronic device does not receive an operation from a user within a preset time period.

14. The electronic device of claim 2, wherein the triggering event of the first display mode comprises:
when the display screen works in the second display mode, a power button of the electronic device is pressed;
when the display screen works in the second display mode, a fingerprint module of the electronic device receives a user fingerprint unlocking operation and the electronic device is successfully unlocked; or
when the display screen works in the second display mode, the electronic device receives an incoming call or receives a short message.

15. An electronic device, comprising a display screen and a co-processing chip, wherein the co-processing chip comprises:
a control unit configured to generate second display data; and
a switching module comprising a first port, a second port, and a third port, wherein the first port is electrically connected to the control unit to receive the second display data, the second port is configured to receive first display data, the third port is selectively connected to the first port or the second port, and the third port is further electrically connected to the display screen to output the second display data or the first display data to the display screen.

16. The electronic device of claim 15, wherein the switching module further comprises a fourth port, and the fourth port is electrically connected to the control unit to receive a first control command or a second control command sent by the control unit; and
the switching module is configured to control the third port to be electrically connected to the first port according to the first control command or control the third port to be electrically connected to the second port according to the second control command.

17. The electronic device of claim 15, wherein the co-processing chip further comprises:
a storage unit electrically connected to the control unit, wherein the storage unit is configured to store the second display data, and the first port is further electrically connected to the storage unit to receive the second display data.

18. A co-processing chip, comprising:
a control unit configured to generate second display data; and
a switching module comprising a first port, a second port, and a third port, wherein the first port is electrically connected to the control unit to receive the second display data, the second port is configured to receive first display data, the third port is selectively connected to the first port or the second port to output the second display data or the first display data to outside.

19. The co-processing chip of claim 18, wherein the switching module further comprises a fourth port, and the fourth port is electrically connected to the control unit to receive a first control command or a second control command sent by the control unit; and
the switching module is configured to control the third port to be electrically connected to the first port according to the first control command or control the third port to be electrically connected to the second port according to the second control command.

20. The co-processing chip of claim 18, further comprising:
a storage unit electrically connected to the control unit, wherein the storage unit is configured to store the second display data, and the first port is further electrically connected to the storage unit to receive the second display data.
